# EUROPEAN PATENT SPECIFICATION

(11) **EP 3 886 567 B1**
(45) Date of publication and mention of the grant of the patent: **23.07.2025**
(21) Application number: 19828379.8
(22) Date of filing: 27.11.2019
(51) Int. Cl.: A01G 9/02, A01G 25/02, A01G 13/33

(54) **SYSTEM AND METHOD FOR PLANT AGRICULTURE**
SYSTEM UND VERFAHREN FÜR DIE PFLANZENLANDWIRTSCHAFT
SYSTÈME ET PROCÉDÉ D'AGRICULTURE DE PLANTE

(30) Priority: 29.11.2018 US 201862772975 P
(43) Date of publication of application: 06.10.2021
(73) Proprietor: Jardin Holdings I, LLC, Sarasota, FL 34236 (US)
(72) Inventor: GARDINIER, Stephane, Sarasota, FL 34236 (US); JONES, Lee C., Trail Okeechobee, FL 34974 (US); McMANUS, Matthew, Sarasota, FL 34236 (US)
(74) Representative: HGF
(86) International application number: PCT/US2019/063630
(87) International publication number: WO 2020/113019

(56) References cited:
- EP-A1- 0 764 400
- WO-A1-86/00494
- KR-A- 20140 148 258
- US-A- 3 362 106
- US-A1- 2008 282 609
- US-A1- 2015 072 862
- US-A1- 2016 014 975

## Description

### FIELD OF INVENTION

The present invention generally relates to agriculture and, more particularly, to a plant agriculture system and method of growing plants to maximize yield while reducing water usage and chemical runoff.

Examples are disclosed in US 2008/282609 A1 and KR 2014 0148258 A.

### BACKGROUND INFORMATION

Plant agriculture is defined as any plant, or part thereof, grown, maintained, or otherwise produced for commercial purposes, including growing, maintaining, or otherwise producing plants for sale or trade, for research or experimental purposes, or for use in part or in their entirety in another location. Plant agriculture is always concerned with improving production and reducing any harmful effects resulting from use of the land to grow plants.

The water in brooks, streams and creeks around the world carry a heavy load of nitrates from fertilizers used for plant agriculture. These nitrates eventually make their way downstream to rivers, lakes and oceans, carrying the nitrogen and oxygen from the nitrates and fertilizing blooms of algae that deplete oxygen in the water, often endangering fish and wildlife. Typically, bacteria in the water remove the excess fertilizer from the water through a chemical process known as de-nitrification, which enables the bacteria to convert the nitrate to nitrogen that is released to the atmosphere as a gas.

Over-fertilization is a leading cause of fertilizer (nitrate) runoff. Over-fertilization occurs when more nutrients are added to the soil than the plants can utilize; unused nutrients are then carried away by irrigation or rain water. Several factors can result in over-fertilization. It can be difficult to determine the nutrient content of some organic fertilizers; as a result, excess nutrients may exceed the estimated content. Farmers may also misdiagnose poor plant growth as a nutrient deficiency, and add fertilizer as a corrective measure.

Improper irrigation and control of water runoff is another cause of problems related to fertilizer runoff. Unfortunately, water control from large farm fields is nearly impossible due to weather, which may drop large amounts of water in a short period. The water follows the natural contours of the land to reach ditches, streams and creeks which flow further downstream to the larger bodies of water until flow reaches the ocean.

Potential solutions to the problems are difficult to implement. We could quit growing crops such as corn, which is used for fuel and feed for animals. Alternatively, we could quit fertilizing fields and treating them with herbicides and pesticides. However, neither of these approaches is practical or realistic given the amount of food that must be produced per acre of land to feed the people of the world.

Therefore, what is needed is a system and method of farming that not only reduces runoff but also reduces the need for water, pesticides and herbicides, and will produce at least as much food per acre as the present methods. The system should be relatively easy to implement in order to achieve acceptance by the end user. The system must be easily and quickly assembled using minimal equipment and requiring a minimal number of persons.

Thus, the present invention provides a method and system of plant agriculture as claimed in claims 1 and 15. The system and method of plant agriculture of the present invention not only provides for relative ease in the assembly and use, it also permits reduction in the amount of water necessary for proper plant production. The present invention also reduces the amount of herbicides and pesticides needed, thereby reducing the amount of undesired runoff of chemicals that causes problems with algae blooms and the like.

### SUMMARY OF THE INVENTION

Briefly, the invention involves a method and system for plant agriculture as claimed in claims 1 and 15. The system includes a sheet of barrier material upon which soil is placed. A drip tube is placed in the soil so that the soil can be shaped, and the sheet material is folded over the top of the soil so that the edges of the sheet overlap. A seal, which may be soil, is placed on the overlapping edges of the sheet to hold the sheet material in a closed position. The crop is planted through the sheet material, and growth occurs through the aperture created during planting.

Accordingly, it is an objective of the present invention to provide a system and method of plant agriculture.

It is a further objective of the present invention to provide a system and method of plant agriculture that reduces water requirements for plant growth.

It is yet a further objective of the present invention to provide a system and method of plant agriculture that reduces runoff of water, including chemicals and leaching of chemicals into soil proximate plant growth.

It is another objective of the present invention to provide a plant agriculture system that reduces the need for chemical application to the soil by application of the chemicals to a sheet material which provides a barrier to adjacent soil.

Other objectives and advantages of this invention will become apparent from the following description taken in conjunction with the accompanying drawings wherein are set forth, by way of illustration and example, certain embodiments of this invention. The drawings constitute a part of this specification, include exemplary embodiments of the present invention, and illustrate various objects and features thereof.

### BRIEF DESCRIPTION OF THE FIGURES

Figure 1 is a partial top perspective view of the prior art to the present invention;
Figure 2 is a partial top perspective view, illustrating one embodiment of field preparation for installation of the present system;
Figure 3 is a partial top perspective view of the embodiment shown in Fig. 2, illustrating assembly of the present system;
Figure 4 is a partial top perspective view of the embodiment shown in Figs. 2 and 3, illustrating the present system ready for planting;
Figure 5 is a pictorial view, illustrating plant growth using the present system and method;
Figure 6 is a graph illustrating total biomass growth of tomatoes using the present system;
Figure 7 is a graph comparing first harvest yields of the present system compared to the prior art system; and
Figure 8 is a graph illustrating the water use requirements of the present system compared to the prior art systems.

### DETAILED DESCRIPTION OF THE PREFERRED EMBODIMENTS

While the present invention is susceptible of embodiment in various forms, there is shown in the drawings and will hereinafter be described a presently preferred embodiment with the understanding that the present disclosure is to be considered an exemplification of the invention and is not intended to limit the invention to the specific embodiments illustrated.

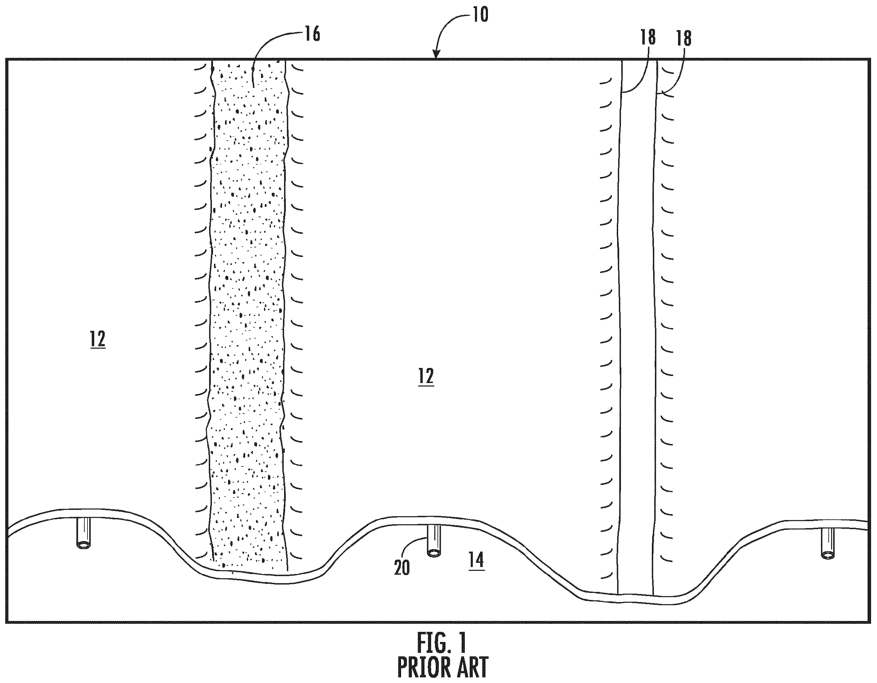

Referring generally to Fig. 1, a prior art system of plant growth 10 of produce, such as tomatoes or peppers, is illustrated. The plant growth system 10 includes a sheet of plastic 12 covering an elongated mound of soil 14. A second mound of soil 16 is piled onto the edges 18 of the plastic sheet 12 to hold the plastic 12 in position. A drip tube 20 is placed in the soil to provide water to the growing plants. While this system cuts down on weed growth and reduces evaporation to the atmosphere, it fails to control leaching of water, herbicides and pesticides to the soil below.

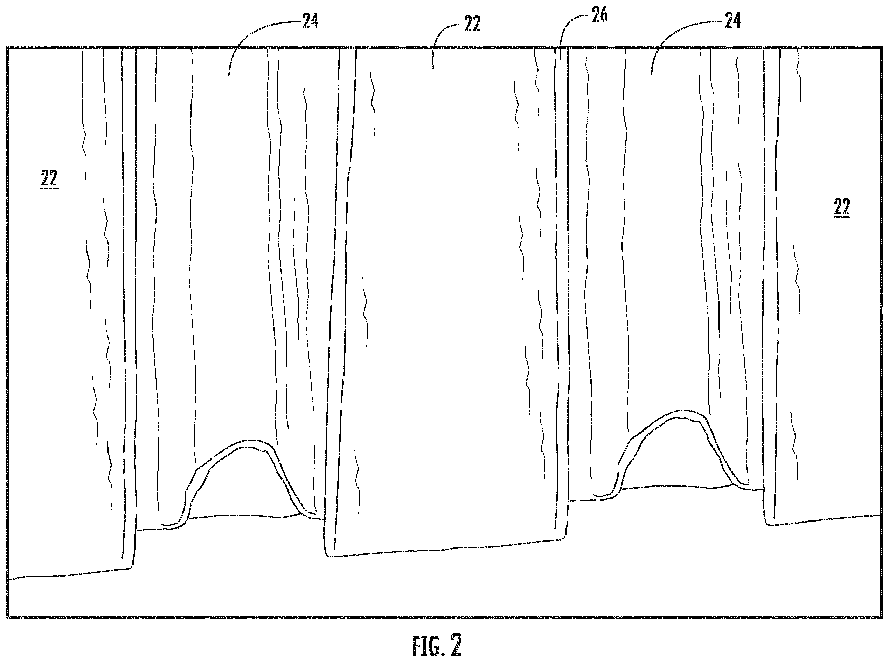

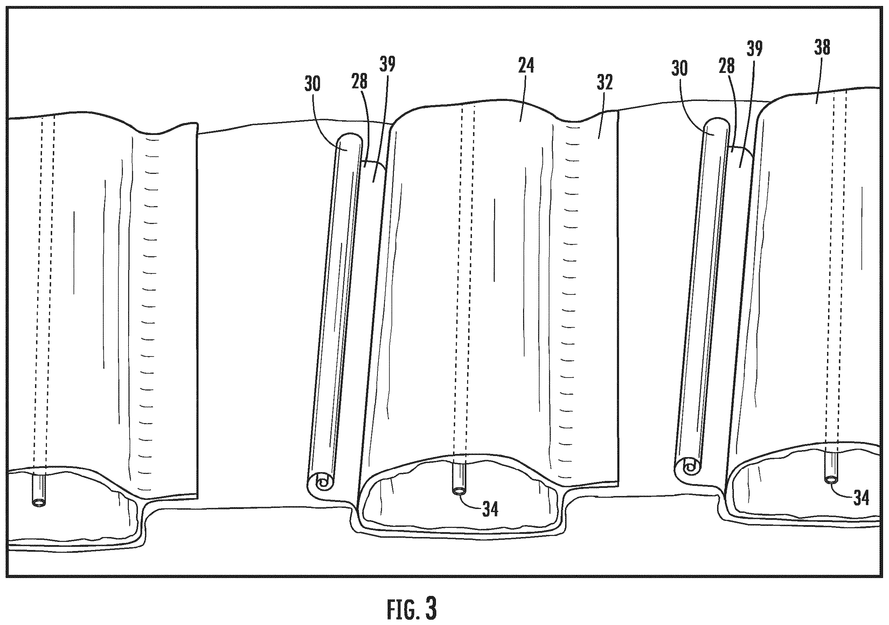

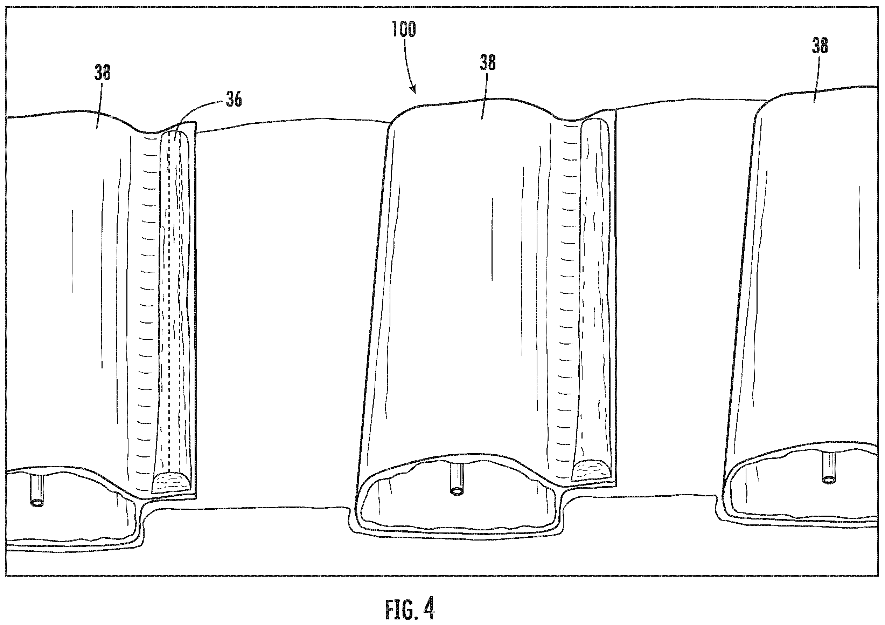

Referring to Figs. 2-4, one embodiment of the plant agriculture system and method 100 is illustrated. The plant agriculture system 100 of the preferred embodiment includes ground preparation, which may include forming a depression 22 in the topsoil 24. The depression 22 is relatively shallow and may include sidewalls 26. The depression 22 is generally sized to allow a suitable amount of topsoil 24 to be moved to a side position adjacent the depression 22, as illustrated in Fig. 2. A piece of sheet material 28 is laid along the depression 22 with a remainder 30 of the sheet material 28 positioned on one side of the depression 22 and an distal edge 32 extending along the opposite side of the depression 22, thereby covering the depression. The depression topsoil 24 from the side position is moved onto the sheet material 28 with the distal edge 32 still protruding from the depression 22, while the remainder 30 of the sheet material 28 extends adjacent the depression. A drip tube 34 is positioned within and extends along the length of the topsoil 24. The topsoil 24 may be formed into a desired shape with rollers, blades and the like. Suitable shapes include, but should not be limited to, a trapezoid or a rectangle when viewed from the end. Once the topsoil 24 is shaped, the remainder 30 of the sheet material 28 is positioned across the top surface of the topsoil 24 having the distal edges 32 positioned in an overlapping fashion. In the preferred embodiment, a small portion of the topsoil 24 is positioned on top of the overlapping distal edges 32 to hold the sheet material 28 in a closed position as illustrated in the middle illustration of Fig. 4. Alternatively, the distal edges 32 may be glued, welded, stitched 36, or otherwise secured together to form an elongate tube 38 of the sheet material 28 containing the topsoil 24, as illustrated on the left portion of Fig. 4. Once the elongate tube 38 is formed, seeds, seedlings, plants or the like may be planted through the sheet material 28 as is known in the art, so that the roots are positioned within the elongate tube and the remainder of the plant extends out of the elongate tube. While the figures illustrate the distal edges 32 of the sheet material 28 as being positioned on one side of the depression 22, it should be noted that the distal edges 32 may be positioned at any point around the topsoil 24, so long as the distal edges 32 are secured together to form the elongated tube 38 to hold in the water and fertilizer, without departing from the scope of the invention. The system 100 is also extremely versatile for a variety of crops and crop types. For example, the depression can be sized to create beds of topsoil of various sizes for different crops. As a non-limiting example, for strawberries and tomatoes, a trapezoid or rectangle of topsoil 24 could be sized for eighteen inches (46 centimetres) of depth and twenty-four inches (61 centimetres) of width. Watermelons may need six to twelve inches (15 to 30 centimetres) of topsoil depth and thirty-six inches (91 centimetres) of width. The elongated tubes 38 of topsoil 24 may be spaced to have longitudinal centerlines that are at any suitable distance apart with respect to each other for equipment to pass between the tubes. As a non-limiting example, six feet apart is very common for watermelon growth and harvest. However, tubes for strawberries may be placed closer together provided the equipment will fit between or over the top of the tubes. In this manner, the present system 100 provides great versatility for farming techniques that are employed all over the world for growing various crops. In places where farm land is scarce, the longitudinal centerlines of the crops may be moved closer together and the crops harvested by hand to increase the density of production on smaller tracts of land while minimizing the need for fertilizer and water. The present system also provides a method and system 100 for farming areas where the climate is generally thought of as being too arid to successfully grow crops. Because the water is contained within the sheet material 28, these areas may now be utilized to produce food for an ever increasing population.

Still referring to Figs. 2-4, the sheet material 28 is preferably a polymer that may be biodegradable. In some embodiments, the sheet material 28 is plastic sheeting of a suitable thickness to withstand weathering for at least one growing season, and may be constructed to withstand two or more growing seasons; whereby at least two sets of plant crops are grown in the elongate tubes 38 before they must be deconstructed and reconstructed again. In at least some embodiments, the sheet material 28 is coated on one side. The coating 39 may include, but should not be limited to, fertilizer(s), herbicides, pesticides and suitable combinations thereof. In this manner, the amounts of chemicals applied to the topsoil 24 are closely controlled, while leaching and run off are minimized.

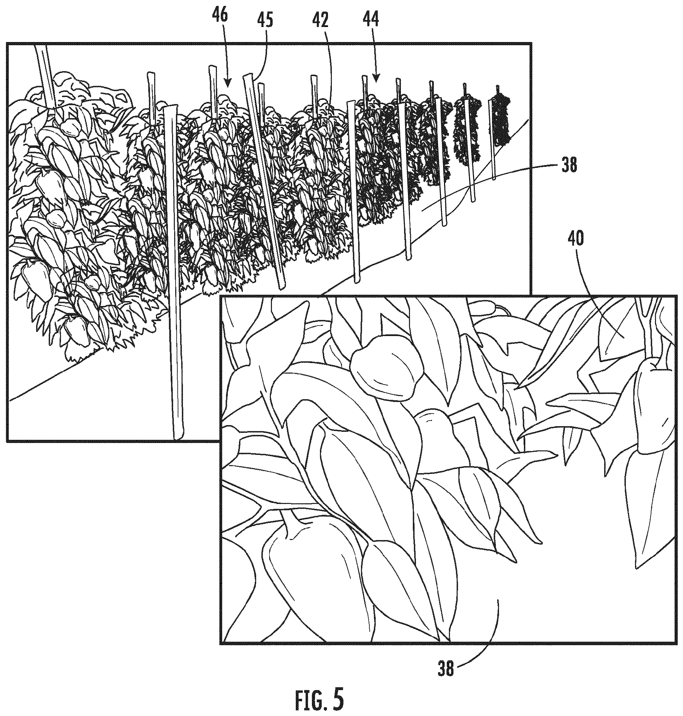

Referring to Fig. 5, seedlings 40, as well as full grown plants 42, are illustrated. As shown, conventional methods of staking 44 and tying 46 plants, such as tomato plants, are useful with the elongated tubes 38, and prevent the stakes 45 from puncturing the tubes 38. The plant agriculture system and method 100 is suitable for use on typical farm fields that may range from a few acres to several hundred acres without departing from the scope of the invention.

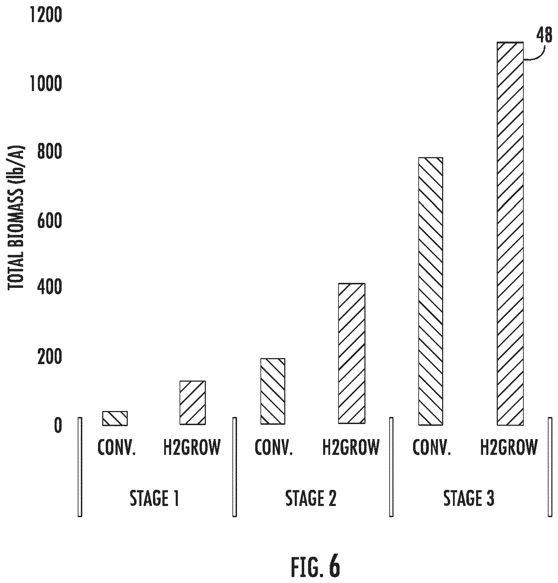

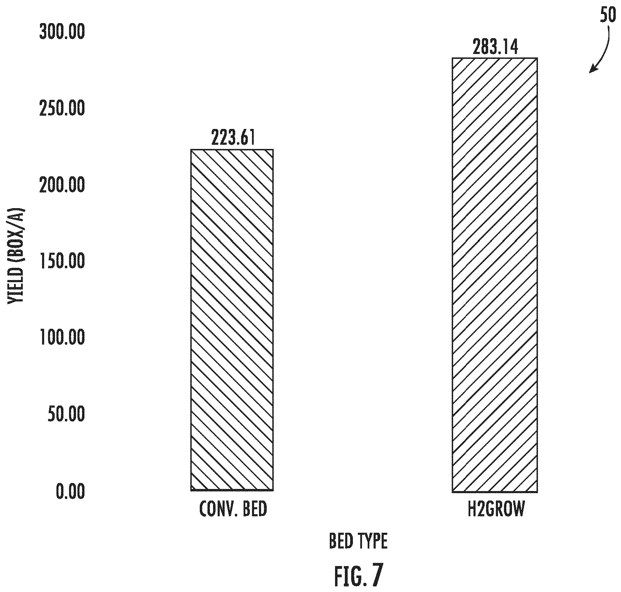

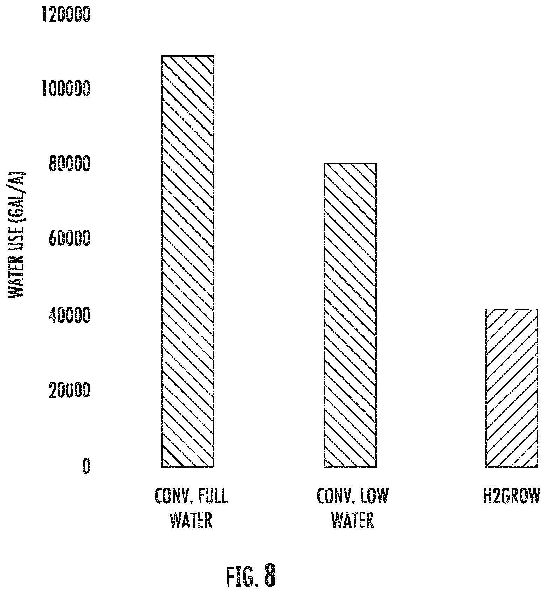

Referring to Figs. 6-8, various graphs are illustrated. The information to produce the graphs was gathered through a study at a Florida University. The information gathered illustrates that the present plant agriculture system 100 increases growth of the plant biomass 48 at all stages of the plant growth. Increased biomass typically results in increased production of edible product by the plants. This particular study utilized tomato plants. Referring to Fig. 7, the study indicated that the tomato yield 50, using the present system, resulted in an increase of 20% when compared to the prior art systems. The study also indicates that the amount of extra-large produce was significantly increased when compared to the prior art. Still yet, the study shows, in Fig. 8, that water usage by the plants was reduced by 62% when compared to the prior art systems. Thus, the present system 100 has been shown to significantly outperform the prior art growing systems.

It is to be understood that while a certain form of the invention is illustrated, it is not to be limited to the specific form or arrangement of parts herein described and shown. It will be apparent to those skilled in the art that various changes may be made without departing from the scope of the as defined by the claims, and the invention is not to be considered limited to what is shown and described in the specification.

One skilled in the art will readily appreciate that the present invention is well adapted to carry out the objects and obtain the ends and advantages mentioned, as well as those inherent therein. Any compounds, methods, procedures and techniques described herein are presently representative of the preferred embodiments, are intended to be exemplary, and are not intended as limitations on the scope. Changes therein and other uses will occur to those skilled in the art. The invention is defined by the claims. Although the invention has been described in connection with specific preferred embodiments, it should be understood that the invention as claimed should not be unduly limited to such specific embodiments.

## Claims

1. A method of plant agriculture comprising:
forming an elongated depression (22) by removing a portion of the topsoil (24) from a farm field, said depression (22) being sized to provide a sufficient amount of the topsoil to construct a shaped crop bed for growing an agriculture crop to harvest, the depression being formed shallow and including sidewalls (26), moving said removed topsoil (24) to a side position adjacent said depression (22), laying a piece of sheet material (28) along the length of said depression with a remainder (30) of said sheet material (28) positioned on one side of said depression (22) and a distal edge (32) of said sheet material (28) extending along an opposite side of said depression (22), thereby covering said depression (22), moving said removed topsoil (24) from the side position adjacent said depression (22) onto said sheet material (28) with said distal edge (32) of said sheet material (28) still protruding from said depression (22), while said remainder (30) of said sheet material (28) extends adjacent said depression, positioning a drip tube (34) along the length of said removed topsoil (24), forming said removed topsoil (24) into a desired shape constructing the crop bed, positioning said remainder (30) of said sheet material (28) including a second distal edge across a top surface of said removed and shaped topsoil (24) having the distal edges (32) of said sheet material (28) positioned in an overlapping position with respect to each other, said distal edges (32) secured together to hold said sheet material (28) together in a closed position.

2. The method of Claim 1 wherein said distal edges (32) are secured together by placing a portion of said removed topsoil (24) on a top surface of said overlapping distal edges (32).

3. The method of Claim 1 wherein said distal edges (32) are secured together by gluing said overlapping distal edges (32) together.

4. The method of Claim 1 wherein said distal edges (32) are secured together by heat welding said overlapping distal edges (32) together.

5. The method of Claim 4 wherein said heat welds are intermittent, having spaces of unwelded areas between said welds.

6. The method of Claim 1 wherein said distal edges (32) are secured together by stitching (36) said overlapping distal edges (32) together.

7. The method of Claim 1 further including planting seeds within said removed topsoil (24) through said sheet material (28) positioned across said top surface of said removed and shaped topsoil (24).

8. The method of Claim 1 further including planting seedlings (40) within said removed topsoil (24) through said sheet material (28) positioned across said top surface of said removed and shaped topsoil (24).

9. The method of Claim 1 including planting plants (42) within said removed topsoil (24) through said sheet material (28) positioned across said top surface of said removed and shaped topsoil (24) so that the roots of said plants (42) are positioned within said removed topsoil (24) and a remainder of said plants (42) extends out through said sheet material (28).

10. The method of Claim 1 wherein said removed topsoil (24) is formed into a trapezoid shape on top of said sheet material (28).

11. The method of Claim 1 wherein said removed topsoil (24) is formed into a rectangle shape on top of said sheet material (28).

12. The method of Claim 1 wherein said sheet material (28) includes a coating (39) on at least one surface thereof.

13. The method of Claim 12 wherein said coating (39) is a fertilizer.

14. The method of Claim 12 wherein said coating (39) is an herbicide or a pesticide.

15. A plant agriculture system formed by the method of any preceding Claim.

## Patentansprüche

1. Verfahren zur Pflanzenlandwirtschaft, umfassend: Ausbilden einer länglichen Vertiefung (22) durch Entfernen eines Teils des Oberbodens (24) von einem landwirtschaftlichen Feld, wobei die Vertiefung (22) so bemessen ist, dass sie eine ausreichende Menge des Oberbodens bereitstellt, um ein geformtes Erntegutbeet zum Anbauen eines landwirtschaftlichen Ernteguts zur Ernte zu konstruieren, wobei die Vertiefung flach ausgebildet ist und Seitenwände (26) einschließt, Bewegen des entfernten Oberbodens (24) in eine Seitenposition benachbart zu der Vertiefung (22), Verlegen eines Stücks Blattmaterial (28) entlang der Länge der Vertiefung, wobei ein Rest (30) des Blattmaterials (28) auf einer Seite der Vertiefung (22) positioniert ist und sich eine distale Kante (32) des Blattmaterials (28) entlang einer gegenüberliegenden Seite der Vertiefung (22) erstreckt, wodurch die Vertiefung (22) abgedeckt wird, Bewegen des entfernten Oberbodens (24) aus der Seitenposition benachbart zu der Vertiefung (22) auf das Blattmaterial (28), wobei die distale Kante (32) des Blattmaterials (28) immer noch aus der Vertiefung (22) herausragt, während sich der Rest (30) des Blattmaterials (28) benachbart zu der Vertiefung erstreckt, Positionieren eines Tropfrohrs (34) entlang der Länge des entfernten Oberbodens (24), Ausbilden des entfernten Oberbodens (24) in einer gewünschten Form, die das Erntegutbeet konstruiert, Positionieren des Rests (30) des Blattmaterials (28) einschließlich einer zweiten distalen Kante über eine obere Oberfläche des entfernten und geformten Oberbodens (24), mit den distalen Kanten (32) des Blattmaterials (28) in einer überlappenden Position in Bezug aufeinander positioniert, wobei die distalen Kanten (32) aneinander gesichert sind, um das Blattmaterial (28) in einer geschlossenen Position zusammenzuhalten.

2. Verfahren nach Anspruch 1, wobei die distalen Kanten (32) aneinander gesichert werden, indem ein Abschnitt des entfernten Oberbodens (24) auf einer oberen Oberfläche der überlappenden distalen Kanten (32) platziert wird.

3. Verfahren nach Anspruch 1, wobei die distalen Kanten (32) aneinander gesichert werden, indem die überlappenden distalen Kanten (32) aneinandergeklebt werden.

4. Verfahren nach Anspruch 1, wobei die distalen Kanten (32) aneinander gesichert werden, indem die überlappenden distalen Kanten (32) miteinander heißverschweißt werden.

5. Verfahren nach Anspruch 4, wobei die Heißverschweißungen intermittierend sind, mit Zwischenräumen von unverschweißten Flächen zwischen den Verschweißungen.

6. Verfahren nach Anspruch 1, wobei die distalen Kanten (32) aneinander gesichert werden, indem die überlappenden distalen Kanten (32) zusammengenäht (36) werden.

7. Verfahren nach Anspruch 1, ferner einschließend Einpflanzen von Samen innerhalb des entfernten Oberbodens (24) durch das Blattmaterial (28), das über die obere Oberfläche des entfernten und geformten Oberbodens (24) positioniert ist.

8. Verfahren nach Anspruch 1, ferner einschließend Einpflanzen von Sämlingen (40) innerhalb des entfernten Oberbodens (24) durch das Blattmaterial (28), das über die obere Oberfläche des entfernten und geformten Oberbodens (24) positioniert ist.

9. Verfahren nach Anspruch 1, einschließend Einpflanzen von Pflanzen (42) innerhalb des entfernten Oberbodens (24) durch das Blattmaterial (28), das über die obere Oberfläche des entfernten und geformten Oberbodens (24) positioniert ist, sodass die Wurzeln der Pflanzen (42) innerhalb des entfernten Oberbodens (24) positioniert sind und sich ein Rest der Pflanzen (42) durch das Blattmaterial (28) herauserstreckt.

10. Verfahren nach Anspruch 1, wobei der entfernte Oberboden (24) oben auf dem Blattmaterial (28) in einer Trapezform ausgebildet wird.

11. Verfahren nach Anspruch 1, wobei der entfernte Oberboden (24) oben auf dem Blattmaterial (28) in einer Rechteckform ausgebildet wird.

12. Verfahren nach Anspruch 1, wobei das Blattmaterial (28) eine Beschichtung (39) auf mindestens einer Oberfläche davon einschließt.

13. Verfahren nach Anspruch 12, wobei die Beschichtung (39) ein Dünger ist.

14. Verfahren nach Anspruch 12, wobei die Beschichtung (39) ein Herbizid oder ein Pestizid ist.

15. Pflanzenlandwirtschaftssystem, das durch das Verfahren nach einem vorhergehenden Anspruch ausgebildet ist.

## Revendications

1. Procédé d'agriculture de plante comprenant :
la formation d'une dépression allongée (22) en retirant une partie de la couche arable (24) d'un champ agricole, ladite dépression (22) étant dimensionnée pour fournir une quantité suffisante de la couche arable pour construire un lit de culture façonné pour cultiver une culture agricole à récolter, la dépression étant formée peu profonde et comprenant des parois latérales (26), le déplacement de ladite couche arable retirée (24) vers une position latérale adjacente à ladite dépression (22), la pose d'un morceau de matériau en feuille (28) le long de la longueur de ladite dépression avec un reste (30) dudit matériau en feuille (28) positionné sur un côté de ladite dépression (22) et un bord distal (32) dudit matériau en feuille (28) s'étendant le long d'un côté opposé de ladite dépression (22), recouvrant ainsi ladite dépression (22), le déplacement de ladite couche arable retirée (24) de la position latérale adjacente à ladite dépression (22) sur ledit matériau en feuille (28) avec ledit bord distal (32) dudit matériau en feuille (28) faisant toujours saillie de ladite dépression (22), tandis que ledit reste (30) dudit matériau en feuille (28) s'étend de manière adjacente à ladite dépression, le positionnement d'un tube d'égouttement (34) le long de ladite couche arable retirée (24), la formation de ladite couche arable retirée (24) en une forme souhaitée construisant le lit de culture, le positionnement dudit reste (30) dudit matériau en feuille (28) comprenant un second bord distal à travers une surface supérieure de ladite couche arable retirée et façonnée (24) comportant les bords distaux (32) dudit matériau en feuille (28) positionnés dans une position de chevauchement les uns par rapport aux autres, lesdits bords distaux (32) étant fixés ensemble pour maintenir ledit matériau en feuille (28) dans une position fermée.

2. Procédé de la revendication 1, dans lequel lesdits bords distaux (32) sont fixés ensemble en plaçant une partie de ladite couche arable retirée (24) sur une surface supérieure desdits bords distaux se chevauchant (32).

3. Procédé de la revendication 1, dans lequel lesdits bords distaux (32) sont fixés l'un à l'autre en collant lesdits bords distaux se chevauchant (32) l'un à l'autre.

4. Procédé de la revendication 1, dans lequel lesdits bords distaux (32) sont fixés l'un à l'autre en soudant à chaud lesdits bords distaux se chevauchant (32) l'un à l'autre.

5. Procédé de la revendication 4, dans lequel lesdites soudures thermiques sont intermittentes, comportant des espaces d'aires non soudées entre lesdites soudures.

6. Procédé de la revendication 1, dans lequel lesdits bords distaux (32) sont fixés l'un à l'autre en cousant (36) lesdits bords distaux se chevauchant (32) l'un à l'autre.

7. Procédé de la revendication 1 comprenant en outre la plantation de graines à l'intérieur de ladite couche arable retirée (24) à travers ledit matériau en feuille (28) positionné à travers ladite surface supérieure de ladite couche arable retirée et façonnée (24).

8. Procédé de la revendication 1 comprenant en outre la plantation de semis (40) à l'intérieur de ladite couche arable retirée (24) à travers ledit matériau en feuille (28) positionné à travers ladite surface supérieure de ladite couche arable retirée et façonnée (24).

9. Procédé de la revendication 1 comprenant la plantation de plantes (42) à l'intérieur de ladite couche arable retirée (24) à travers ledit matériau en feuille (28) positionné à travers ladite surface supérieure de ladite couche arable retirée et façonnée (24) de sorte que les racines desdites plantes (42) sont positionnées à l'intérieur de ladite couche arable retirée (24) et un reste desdites plantes (42) s'étend à travers ledit matériau en feuille (28).

10. Procédé de la revendication 1, dans lequel ladite couche arable retirée (24) est façonnée en une forme trapézoïdale sur le dessus dudit matériau en feuille (28).

11. Procédé de la revendication 1, dans lequel ladite couche arable retirée (24) est façonnée en une forme rectangulaire sur le dessus dudit matériau en feuille (28).

12. Procédé de la revendication 1, dans lequel ledit matériau en feuille (28) comprend un revêtement (39) sur au moins une de ses surfaces.

13. Procédé de la revendication 12, dans lequel ledit revêtement (39) est un engrais.

14. Procédé de la revendication 12, dans lequel ledit revêtement (39) est un herbicide ou un pesticide.

15. Système d'agriculture de plante formé par le procédé d'une quelconque revendication précédente.
